# EUROPÄISCHE PATENTSCHRIFT

(11) **EP 2 839 973 B1**
(45) Veröffentlichungstag und Bekanntmachung des Hinweises auf die Patenterteilung: **28.03.2018**
(21) Anmeldenummer: 14169579.1
(22) Anmeldetag: 23.05.2014
(51) Int. Cl.: B60C 9/14, B60C 15/00, B60C 15/06, B60C 17/00, B60C 5/14, B60C 23/19

(54) **Fahrzeugluftreifen**
Pneumatic tyres for a vehicle
Pneus de véhicule

(30) Priorität: 20.08.2013 DE 102013108949
(43) Veröffentlichungstag der Anmeldung: 25.02.2015
(73) Patentinhaber: Continental Reifen Deutschland GmbH, 30165 Hannover (DE)
(72) Erfinder: Krishnamurthy, Kumar, 30173 Hannover (DE)
(74) Vertreter: Widjaja, Wira

(56) Entgegenhaltungen:
- EP-A1- 1 386 757
- EP-A1- 2 223 813
- WO-A1-2013/065552
- DE-A1- 2 331 530
- US-A- 4 773 463

## Beschreibung

Die Erfindung betrifft einen Fahrzeugluftreifen.

Es ist bekannt, dass bei Fahrzeugluftreifen eine Reifeninnenseele auf der Reifeninnenseite angeordnet ist. Die Reifeninnenseele hat insbesondere die Funktion, den Fahrzeugreifen von der Innenseite her luftdicht zu verschließen. Insbesondere bei Niederquerschnittsreifen kann es infolge von hohen Belastungen in der Seitenwand zu einer Faltenbildung auf der Reifeninnenseite kommen. Eine Faltenbildung auf der Oberfläche der Reifeninnenseele kann im Laufe der Zeit die Luftdichtigkeit des Fahrzeugreifens beeinträchtigen. Die höchsten Beanspruchungen auf der Reifeninnenseite treten im Allgemeinen in Höhe der Seitenwand bis hin zur Reifenschulter auf. Die Dauerbeanspruchung des Fahrzeugreifens beim Abrollen auf einer Fahrbahn führen zu einer zyklischen Einfederung des Fahrzeugreifens in der Reifenschulter und in der Seitenwand, die im Allgemeinen die Dauerhaltbarkeit des Fahrzeugreifens beeinträchtigen kann.
Die DE 23 31 530 A1, EP 2 223 813 A1, EP 1 386 757 A1, WO 2013/065552 A1 und US 4 773 463 A offenbaren bekannte Reifenkonstrukionen.

Der Erfindung liegt die Aufgabe zu Grunde, einen Fahrzeugluftreifen zu schaffen, bei der die Dauerhaltbarkeit von Fahrzeugluftreifen verbessert wird.

Gelöst wird die Aufgabe gemäß Anspruch 1.

Ein Vorteil des erfindungsgemäßen Reifenwulstes ist insbesondere darin zu sehen, dass der Fahrzeugluftreifen durch die neuartige Reifenkonstruktion eine bessere Dauerhaltbarkeit aufweist gegenüber einer herkömmlichen Reifenkonstruktion. Die verbesserte Dauerhaltbarkeit des Fahrzeugreifens wird insbesondere durch Synergie-Effekte erzielt, die mit den einzelnen Merkmalen des Anspruchs 1 in Verbindung stehen.
Die Dauerbeanspruchung, die mit der zyklischen Einfederung des Fahrzeugreifen verbunden ist, führt insbesondere aufgrund von zyklischen Kompressionen zu einer Wärmekonzentration bzw. Wärmeaufbau auf der Reifeninnenseite und speziell im Bereich der Reifenschulter der Reifeninnenseele. Dadurch kann es zu einer Faltenbildung auf der Oberseite der Reifeninnenseele kommen, die dann zu kleinen Rissen führen können. Die Gummilage verändert effektiv eine zu hohe Wärmekonzentration im Bereich der abgedeckten Reifeninnenseele. Die Wärmekonzentration auf der Reifeninnenseite, die durch die Dauerbeanspruchung des Fahrzeugreifens entsteht, kann durch die Gummilage schnell und effektiv abgeleitet werden. Auf diese Weise entstehen auf der Oberfläche der Reifeninnenseele keine Falten, die zu einer Rissbildung führen könnten. Der Fahrzeugreifen besitzt dadurch über seinen gesamten Lebenszyklus eine sehr hohe Luftdichtigkeit und Dauerhaltbarkeit.

Es ist vorgesehen, dass die Materialdicke der Gummilage zwischen 0,2 und 1,0 mm beträgt.
Bei dieser Materialdicke wird gewährleistet, dass sich keine zu hohen Wärmekonzentrationen im Bereich der abgedeckten Reifeninnenseele bilden können.

In einer weiteren vorteilhaften Weiterbildung der Erfindung ist vorgesehen, dass die Gummilage aus einem Gummimaterial mit einem höheren Rückprall- oder Rückfederungswert besteht als das Gummimaterial der Reifeninnenseele, wodurch eine Wärmekonzentration in der Reifeninnenseele verhindert wird.
Dadurch wird eine Verbesserung des Innengeräusches im Reifenhohlraum des Fahrzeugreifens erreicht.

In einer weiteren vorteilhaften Weiterbildung der Erfindung ist vorgesehen, dass das Ende der Karkasslage in Form einer C-Lagenkonstruktiön unterhalb des Reifengürtels endet, wobei zwischen der äußeren Kante der ersten Gürtellage und dem Ende der Karkasslage der Abstand in axialer Richtung zwischen 0 und 30 mm beträgt.
Das Ende der Karkasslage liegt dadurch in einem Bereich des Fahrzeugreifens, der einer relativ geringen Dauerbeanspruchung ausgesetzt ist.

In einer weiteren vorteilhaften Weiterbildung der Erfindung ist vorgesehen, dass zwischen dem obere Ende der Gummilage und dem Ende der Karkasslage der Abstand in axialer Richtung mindestens 3 mm beträgt.
Das obere Ende der Gummilage liegt dadurch in einem Bereich des Fahrzeugreifens, der einer relativ geringen Dauerbeanspruchung ausgesetzt ist. Außerdem liegen beide Enden nicht übereinander, wodurch einer möglichen Rissbildung vorgebeugt wird.

In einer weiteren vorteilhaften Weiterbildung der Erfindung ist vorgesehen, dass das untere Ende der Gummilage im Reifenwulst auf der Höhe des Kernprofiles endet.

Dadurch liegt das untere Ende der Gummilage in einem Bereich des Fahrzeugreifens, welcher einer relativ geringen Dauerbeanspruchung ausgesetzt ist.

In einer weiteren vorteilhaften Weiterbildung der Erfindung ist vorgesehen, dass die Enden der Gummilage rampenförmig mit einer abgeschrägten Kante ausgebildet sind.
Auf diese Weise werden Spannungskonzentrationen im Übergang zur Reifeninnenseele effektiv vermieden.

In einer weiteren vorteilhaften Weiterbildung der Erfindung ist vorgesehen, dass die Höhe des Kernprofiles mindestens 5 mm beträgt, wobei die Breite des Kernprofiles auf der Unterseite 3 bis 10 mm beträgt.
Die Abmessungen des Kernprofiles verbessern in Verbindung mit der Gummilage die Dauerhaltbarkeit des Reifenwulstes.

In einer weiteren vorteilhaften Weiterbildung der Erfindung ist vorgesehen, dass die Reifeninnenseele eine Materialdicke zwischen 0,5 und 2,5 mm aufweist.
Bei dieser Materialdicke wird eine optimale Paarung von Reifeninnenseele und Gummilage erzielt, wodurch einer Faltenbildung optimal entgegengewirkt wird.

In einer weiteren vorteilhaften Weiterbildung der Erfindung ist vorgesehen, dass die Seitenwandhöhe des Fahrzeugreifens kleiner als ca. 115 mm ist.
Bei Fahrzeugreifen mit geringen Seitenwandhöhen sind die Beanspruchungen in der Reifenschulter und auf der Reifeninnenseite besonders hoch.

In einer weiteren vorteilhaften Weiterbildung der Erfindung ist vorgesehen, dass im Reifenwulst ein Wulstverstärker mit Festigkeitsträgern angeordnet ist, wobei sich der Wulstverstärker bis in die Seitenwand erstreckt.
Der Wulstverstärker verbessert die Steifigkeit des Reifenwulstes.

Anhand eines Ausführungsbeispieles soll die Erfindung näher erläutert werden. Es zeigt:

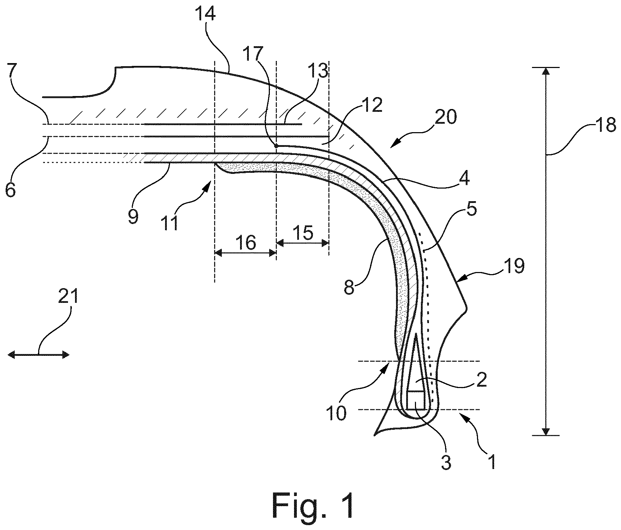

- Fig. 1:: einen Fahrzeugreifen im Querschnitt.

Die Figur 1 zeigt schematisch einen Fahrzeugluftreifen in einer Querschnittansicht, wobei nur eine Hälfte des Fahrzeugreifens dargestellt ist. Im Reifenwulst 1 ist ein Reifenkern 3 mit einem Kernprofil 2 angeordnet. Der Reifen weist eine Karkasslage 4 auf, die im Reifenwulst um den Reifenkern 3 herumgeschlagen ist.
Die Reifenkarkasse ist in Form einer C-Lagenkonstruktion ausgeführt, wobei das Ende 17 der Karkasslage unterhalb des Reifengürtels endet. Auf der Reifeninnenseite weist der Fahrzeugreifen eine Reifeninnenseele 9 auf, die in dem dargestellten Teilbereich durch die zusätzliche Gummilage 8 überdeckt wird. Das untere Ende 10 der Gummlage 8 liegt in etwa auf der Höhe des Kernprofiles 2. Gegenüberliegend ist auf der Reifenkarkasse 4 ein Wulstverstärker 5 angeordnet. Die Gummilage 8 erstreckt sich in der dargestellten Weise über den gesamten Reifenumfang. Das obere Ende 11 der Gummilage 8 endet unterhalb des Randbereiches des Reifengürtels, welches eine erste Gürtellage 6 und eine zweite Gürtellage 7 umfasst. Der Abstand 15 zwischen der äußeren Kante 12 der ersten Gürtellage und dem Ende 17 der Karkasslage beträgt zwischen 0 und 30mm. Der Abstand 16 zwischen dem Ende 17 der Karkasslage und dem oberen Ende 11 der Gummilage beträgt mindestens 3mm.

Auf diese Weise wird insbesondere gewährleistet, dass die hoch beanspruchten Zonen der Reifeninnenseite mit der Gummilage 8 abgedeckt sind. Die nominale Seitenwandhöhe 18 ist kleiner als ca. 115mm. Die dargestellte Reifenkonstruktion lässt sich besonders vorteilhaft bei sogenannten Niederquerschnittsreifen einsetzen. Die Gummilage 8 verändert effektiv die Bildung von Rissen in den abgedeckten Bereichen der Reifeninnenseele 9. Der Fahrzeugreifen besitzt dadurch über seinen gesamten Lebenszyklus eine hohe Dauerhaltbarkeit.

### Bezugszeichenliste

### (ist Teil der Beschreibung)

- 1: Reifenwulst
- 2: Kernprofil
- 3: Reifenkern (Apex)
- 4: Karkasslage
- 5: Wulstverstärker
- 6: Erste Gürtellage
- 7: Zweite Gürtellage
- 8: Zusätzliche Gummilage
- 9: Reifeninnenseele (Innerliner)
- 10: Unteres Ende der Gummilage
- 11: Oberes Ende der Gummilage
- 12: Äußere Kante der ersten Gürtellage
- 13: Äußere Kante der zweiten Gürtellage
- 14: Laufstreifen
- 15: Abstand zwischen äußeren Kante der ersten Gürtellage und Ende der Karkasslage
- 16: Abstand zwischen Ende der Karkasslage und oberen Ende der Gummilage
- 17: Ende der Karkasslage
- 18: Nominale Seitenwandhöhe
- 19: Reifenseitenwand
- 20: Reifenschulter
- 21: axiale Richtung

## Patentansprüche

1. Fahrzeugluftreifen mit einem Laufstreifen (14), einem Reifengürtel, einer Reifenseitenwand (19), einer Reifenschulter (20), einer Reifeninnenseele (9) und einem Reifenwulst (1) mit einem Kern (3) und einem Kernprofil (2), wobei der Reifengürtel mindestens zwei Gürtellagen (6, 7) mit eingebetteten Festigkeitsträgern umfasst,
wobei das Kernprofil (2) den Kern (3) rotationssymmetrisch zur axialen Achse des Fahrzeugluftreifens umschließt und mindestens eine Karkasseinlage (4) um den Kern (3) mit dem Kernprofil (2) herumgeschlagen ist,
wobei der Fahrzeugreifen ein Hochgeschwindigkeitsreifen mit einem Niederquerschnitt ist,
auf der Reifeninnenseite innerhalb der Reifeninnenseele (9) eine zusätzliche Gummilage (8) angeordnet ist,
wobei das radial innere Ende (10) der Gummilage (8) im Bereich des Reifenwulstes (1) radial außerhalb der Unterseite des Reifenkernes (3) angeordnet ist,
wobei die Gummilage (8) die Reifeninnenseele (9) bis in den Bereich der Reifenschulter (20) überdeckt,
wobei das radial äußere Ende (11) der Gummilage (8) in axialer Richtung (21) des Fahrzeugreifens radial innerhalb der ersten Gürtellage (12) endet,
wobei durch die Gummilage (8) eine Wärmekonzentration und Faltenbildung auf der Oberseite der abgedeckten Reifeninnenseele (9) verhindert wird,
**dadurch gekennzeichnet, dass**,
die Materialdicke der Gummilage (8) zwischen 0,2 und 1,0 mm beträgt.

2. Fahrzeugluftreifen nach Anspruch 1,
**dadurch gekennzeichnet, dass**
die Gummilage (8) aus einem Gummimaterial mit einem höheren Rückprall-oder Rückfederungswert besteht als das Gummimaterial der Reifeninnenseele (9), wodurch eine Wärmekonzentration in der Reifeninnenseele (9) verhindert wird.

3. Fahrzeugluftreifen nach einem der vorhergehenden Ansprüche,
**dadurch gekennzeichnet, dass**
das Ende der Karkasslage (17) in Form einer C-Lagenkonstruktion unterhalb des Reifengürtels endet,
wobei zwischen der äußeren Kante (12) der ersten Gürtellage (6) und dem Ende (17) der Karkasslage der Abstand (15) in axialer Richtung (21) zwischen 0 und 30 mm beträgt.

4. Fahrzeugluftreifen nach einem der vorhergehenden Ansprüche,
**dadurch gekennzeichnet, dass**
zwischen dem obere Ende (11) der Gummilage (8) und dem Ende der Karkasslage (17) der Abstand (16) in axialer Richtung (21) mindestens 3 mm beträgt.

5. Fahrzeugluftreifen nach einem der vorhergehenden Ansprüche,
**dadurch gekennzeichnet, dass**
das untere Ende (10) der Gummilage (8) im Reifenwulst (1) auf der Höhe des Kernprofiles (2) endet.

6. Fahrzeugluftreifen nach einem der vorhergehenden Ansprüche,
**dadurch gekennzeichnet, dass**
die Enden (10, 11) der Gummilage (8) rampenförmig mit einer abgeschrägten Kante ausgebildet sind.

7. Fahrzeugluftreifen nach einem der vorhergehenden Ansprüche,
**dadurch gekennzeichnet, dass**.
die Höhe des Kernprofiles (2) mindestens 5 mm beträgt,
wobei die Breite des Kernprofiles (2) auf der Unterseite 3 bis 10 mm beträgt.

8. Fahrzeugluftreifen nach einem der vorhergehenden Ansprüche,
**dadurch gekennzeichnet, dass**
die Reifeninnenseele (9) eine Materialdicke zwischen 0,5 und 2,5 mm aufweist.

9. Fahrzeugluftreifen nach einem der vorhergehenden Ansprüche,
**dadurch gekennzeichnet, dass**
die Seitenwandhöhe (18) des Fahrzeugreifen (3) kleiner als ca. 115 mm ist.

10. Fahrzeugluftreifen nach einem der vorhergehenden Ansprüche,
**dadurch gekennzeichnet, dass**
im Reifenwulst (1) ein Wulstverstärker (5) mit Festigkeitsträgern angeordnet ist, wobei sich der Wulstverstärker (5) bis in die Seitenwand (19) erstreckt.

## Claims

1. Pneumatic vehicle tyre with a tread (14), a tyre breaker belt, a tyre sidewall (19), a tyre shoulder (20), a tyre inner core (9) and a tyre bead (1) with a bead core (3) and a bead filler (2), the tyre breaker belt comprising at least two belt plies (6, 7) with embedded reinforcing elements,
the bead filler (2) enclosing the bead core (3) rotationally symmetrically in relation to the axial axis of the pneumatic vehicle tyre and at least one carcass insert (4) being turned up around the bead core (3) with the bead filler (2),
the vehicle tyre being a high-speed low-section tyre,
an additional rubber ply (8) being arranged inside the tyre inner core (9) on the inner side of the tyre,
the radially inner end (10) of the rubber ply (8) being arranged in the region of the tyre bead (1) radially outside the underside of the tyre bead core (3),
the rubber ply (8) covering over the tyre inner core (9) as far as into the region of the tyre shoulder (20),
the radially outer end (11) of the rubber ply (8) ending in the axial direction (21) of the vehicle tyre radially inside the first rubber ply (12),
the rubber ply (8) preventing a concentration of heat and formation of folds on the upper side of the covered tyre inner core (9),
**characterized in that**
the material thickness of the rubber ply (8) is between 0.2 and 1.0 mm.

2. Pneumatic vehicle tyre according to Claim 1,
**characterized in that**
the rubber ply (8) consists of a rubber material with a higher rebound or resilience value than the rubber material of the tyre inner core (9), thereby preventing a concentration of heat in the tyre inner core (9).

3. Pneumatic vehicle tyre according to one of the preceding claims,
**characterized in that**
the end of the carcass ply (17) ends in the form of a C-ply construction underneath the tyre breaker belt,
the distance (15) in the axial direction (21) between the outer edge (12) of the first belt ply (6) and the end (17) of the carcass ply being between 0 and 30 mm.

4. Pneumatic vehicle tyre according to one of the preceding claims,
**characterized in that**
the distance (16) in the axial direction (21) between the upper end (11) of the rubber ply (8) and the end of the carcass ply (17) is at least 3 mm.

5. Pneumatic vehicle tyre according to one of the preceding claims,
**characterized in that**
the lower end (10) of the rubber ply (8) ends in the tyre bead (1) at the height of the bead filler (2).

6. Pneumatic vehicle tyre according to one of the preceding claims,
**characterized in that**
the ends (10, 11) of the rubber ply (8) are formed in a ramp-like manner with a bevelled edge.

7. Pneumatic vehicle tyre according to one of the preceding claims,
**characterized in that**
the height of the bead filler (2) is at least 5 mm, the width of the bead filler (2) on the underside being 3 to 10 mm.

8. Pneumatic vehicle tyre according to one of the preceding claims,
**characterized in that**
the tyre inner core (9) has a material thickness of between 0.5 and 2.5 mm.

9. Pneumatic vehicle tyre according to one of the preceding claims,
**characterized in that**
the sidewall height (18) of the vehicle tyre (3) is less than about 115 mm.

10. Pneumatic vehicle tyre according to one of the preceding claims,
**characterized in that**
a bead reinforcer (5) with reinforcing elements is arranged in the tyre bead (1), the bead reinforcer (5) extending as far as into the sidewall (19).

## Revendications

1. Pneumatique de véhicule avec une bande de roulement (14), une nappe de pneumatique, un flanc de pneumatique (19), un épaulement de pneumatique (20), une gomme intérieure de pneumatique (9) et un talon de pneumatique (1) avec une tringle (3) et un profil de tringle (2),
dans lequel la nappe de pneumatique comprend au moins deux couches de nappe (6, 7) avec des éléments de résistance incorporés,
dans lequel le profil de tringle (2) entoure la tringle (3) en symétrie de rotation par rapport à l'axe axial du pneumatique de véhicule et au moins une couche de carcasse (4) est rabattue autour de la tringle (3) avec le profil de tringle (2),
dans lequel le pneumatique de véhicule est un pneumatique pour grande vitesse à taille basse,
une couche de gomme supplémentaire (8) est disposée sur le côté intérieur du pneumatique à l'intérieur de la gomme intérieure de pneumatique (9),
dans lequel l'extrémité radialement intérieure (10) de la couche de gomme (8) est disposée dans la région du talon de pneumatique (1) radialement à l'extérieur du côté inférieur de la tringle de pneumatique (3),
dans lequel la couche de gomme (8) recouvre la gomme intérieure de pneumatique (9) jusque dans la région de l'épaulement de pneumatique (20),
dans lequel l'extrémité radialement extérieure (11) de la couche de gomme (8) se termine en direction axiale (21) du pneumatique de véhicule radialement à l'intérieur de la première couche de nappe (12),
dans lequel une concentration de chaleur et une formation de plis sur le côté supérieur de la gomme intérieure de pneumatique recouverte (9) sont empêchées par la couche de gomme (8),
**caractérisé en ce que** l'épaisseur de matière de la couche de gomme (8) vaut entre 0,2 et 1,0 mm.

2. Pneumatique de véhicule selon la revendication 1, **caractérisé en ce que** la couche de gomme (8) se compose d'un matériau de gomme avec une valeur de rebond ou une valeur de retour élastique plus élevée que le matériau de gomme de la gomme intérieure de pneumatique (9), ce qui empêche une concentration de chaleur dans la gomme intérieure de pneumatique (9).

3. Pneumatique de véhicule selon l'une quelconque des revendications précédentes, **caractérisé en ce que** l'extrémité de la couche de carcasse (17) se termine en forme de structure de couche en C, dans lequel la distance (15) en direction axiale (21) entre le bord extérieur (12) de la première couche de nappe (6) et l'extrémité (17) de la couche de carcasse vaut entre 0 et 30 mm.

4. Pneumatique de véhicule selon l'une quelconque des revendications précédentes, **caractérisé en ce que** la distance (16) en direction axiale (21) entre l'extrémité supérieure (11) de la couche de gomme (8) et l'extrémité de la couche de carcasse (17) vaut au moins 3 mm.

5. Pneumatique de véhicule selon l'une quelconque des revendications précédentes, **caractérisé en ce que** l'extrémité inférieure (10) de la couche de gomme (8) se termine dans le talon de pneumatique (1) à la hauteur du profil de tringle (2).

6. Pneumatique de véhicule selon l'une quelconque des revendications précédentes, **caractérisé en ce que** les extrémités (10, 11) de la couche de gomme (8) sont réalisées en forme de rampe avec un bord biseauté.

7. Pneumatique de véhicule selon l'une quelconque des revendications précédentes, **caractérisé en ce que** la hauteur du profil de tringle (2) vaut au moins 5 mm, dans lequel la largeur du profil de tringle (2) sur le côté inférieur vaut 3 à 10 mm.

8. Pneumatique de véhicule selon l'une quelconque des revendications précédentes, **caractérisé en ce que** la gomme intérieure de pneumatique (9) présente une épaisseur de matière entre 0,5 et 2,5 mm.

9. Pneumatique de véhicule selon l'une quelconque des revendications précédentes, **caractérisé en ce que** la hauteur de flanc (18) du pneumatique de véhicule (3) est inférieure à environ 115 mm.

10. Pneumatique de véhicule selon l'une quelconque des revendications précédentes, **caractérisé en ce qu'**un renfort de talon (5) avec des éléments de résistance est disposé dans le talon de pneumatique (1), dans lequel le renfort de talon (5) s'étend jusque dans le flanc (19).
